# EUROPÄISCHE PATENTSCHRIFT

(11) **EP 1 714 770 B1**
(45) Veröffentlichungstag und Bekanntmachung des Hinweises auf die Patenterteilung: **21.07.2010**
(21) Anmeldenummer: 05008855.8
(22) Anmeldetag: 22.04.2005
(51) Int. Cl.: B29C 47/90

(54) **Kalibrierkorb für einen Folienschlauch**
Calibrating cage for blown films
Cage de calibrage pour un film soufflé

(43) Veröffentlichungstag der Anmeldung: 25.10.2006
(73) Patentinhaber: Kdesign GmbH, 53639 Königswinter (DE)
(72) Erfinder: Zimmermann, Richard, 53127 Bonn (DE); Fähling, Gerd, 53773 Hennef (DE)
(74) Vertreter: Neumann, Ernst Dieter

(56) Entgegenhaltungen:
- EP-A- 1 254 757
- EP-A- 1 386 719
- DE-A1- 3 117 806
- US-A- 4 655 988
- US-A- 5 441 395

## Beschreibung

Die Erfindung betrifft einen Kalibrierkorb zur Durchmesserkalibrierung von aus einem Folienblaskopf austretenden nach oben abgezogenen Folienschläuchen, an dem Rollen mit etwa horizontaler Achse in im wesentlichen tangentialer Anordnung zum runden Schlauchquerschnitt umfangsverteilt in mehreren übereinanderliegenden Ebenen angeordnet sind.

Aus der EP 1 254 757 A1 ist ein Kalibrierkorb der genannten Art bekannt, bei welchem in mehreren übereinanderliegenden Ebenen jeweils eine Mehrzahl von geraden Rollen ungefähr tangential zum Folienschlauch auf Schwenkarmen einseitig gehalten sind, wobei die auf dem Korbumfang gelagerten Schwenkarme synchron verstellbar sind. Bereits bei geringen Verstellbewegungen der Schwenkarme liegen die Rollen nicht mehr tangential zu einem idealen runden Schlauchquerschnitt, sondern bilden Winkelfehler gegenüber diesem. Dabei wandern Die Rollenanlagepunkte gegenüber dem Folienschlauch von einer idealen Mittelposition zu dem einen oder anderen Rollenende hin. Die geringe Anzahl der Rollen deformiert den Folienschlauch zu einem deutlich ausgeprägten Polygonquerschnitt.

Aus der EP 1 386 719 A1 ist ein Kalibrierkorb der genannten Art bekannt, bei dem in mehreren übereinanderliegenden Ebenen jeweils eine Mehrzahl von Führungsbügeln mit sich dazwischen erstreckenden nach einem Kreis gebogenen Führungsstangen vorgesehen sind, auf denen jeweils eine Vielzahl von kürzeren Führungsrollen gelagert ist. Die Vielzahl von Führungsrollen erzeugt jeweils an den Stößen zwischen den Rollen eine entsprechende Vielzahl von Längsmarkierungen auf dem Folienschlauch, der damit mindere Qualität erhält.

Aus der US 5,441,395 ist einen Kalibrierkorb gemäß dem Oberbegriff des Anspruchs 1 bekannt, bei dem die Rollen in Aufsicht in Richtung des Folienschlauches jeweils paarweise V-förmig angeordnet und in Gruppen von übereinanderliegenden Paaren gemeinsam radial zum Folienschlauch verstellbar sind. Jeweils an den inneren Enden der Rollen der Rollenpaare im Winkel des V befindet sich eine Halterung, die bei einem Einformen des Folienschlauches in die Rollenpaare zu einem Kontakt des durchziehenden Folienschlauches mit stehenden Teilen führen, der qualitätsmindernde Schädigungen der Schlauchoberfläche verursacht.

Hiervon ausgehend liegt der vorliegenden Erfindung die Aufgabe zugrunde, einen Kalibrierkorb der genannten Art in einfacher Ausführung bereitzustellen, bei dem eine gute Anpassung an die Kreisform bei unterschiedlichen Größen des Folienschlauchs möglich ist und gleichzeitig die Ausbildung von unerwünschten Längsmarkierungen sicher verhindert wird.

Die Aufgabe wird erfindungsgemäß durch einen Kalibrierkorb mit den Merkmalen des kennzeichnenden Teils des Anspruchs 1 gelöst.

Die paarweise symmetrische, in Draufsicht V-förmige Anordnung der Rollenpaare ergibt bei einer geringen erforderlichen Gesamtzahl von Trägersystemen einen gleichmäßigen Polygonquerschnitt, dessen Geometrie auch bei radialer Verstellung der Rollenpaare sich weitgehend ähnlich bleibt. Hiermit kann eine ideale Querschnittform des Folienschlauchs bei jedem Durchmesser am Folienschlauch eingestellt werden. Die Rollen sind hierbei jeweils einseitig, d.h. von nur einem Ende her gehalten bzw. fliegend gelagert. Dabei überkreuzen sich auch ihre äußeren Enden, so daß der Polygonquerschnitt in Draufsicht keine Unterbrechungen hat. Der Folienschlauch kann dadurch mit stehenden, nicht drehbar gelagerten Teilen des Kalibrierkorbes praktisch nicht in Kontakt treten. Vorzugsweise sind innerhalb einer Ebene zumindest acht Rollenpaare, d.h. sechzehn Rollen, gleichmäßig über dem Umfang verteilt angeordnet. Durch geeignete Rollenauswahl hinsichtlich Oberflächenstruktur und Werkstoff können die Längsmarkierungen völlig verhindert oder zumindest minimiert werden. Eine widerstandsarme Lagerung tut ein übriges hierzu. Besonders vorteilhaft ist hierbei, daß auf die vorhandene Grundkonstruktion eines Kalibrierkorbes zurückgegriffen werden kann, insbesondere eine Verstellvorrichtung benutzt werden kann, bei der jeweils mehrere über dem Umfang verteilte Rollenträger für eine Mehrzahl von übereinanderliegenden Rollenpaaren gemeinsam verstellt werden können. Eine rein zylindrische Ausführung der Rollen vereinfacht und verbilligt die Herstellung, wobei durch die Mehrzahl der über dem Umfang verteilten Rollenpaare im Querschnitt ein Polygon entsteht, das an die angestrebte Kreisquerschnittsform der Schlauchfolie gut angepaßt ist. Durch synchrones Parallelverschieben der Rollenträger radial nach innen oder außen ist eine Anpassung an verschiedene Schlauchfoliendurchmesser problemlos möglich. Der Antrieb von Scherenhebeln, an denen die Rollenträger gehalten sind, kann hierbei mittels synchron angetriebener Spindeln erfolgen, die über einen gemeinsamen Kettentrieb in einem der oberen oder unteren Rahmenteile des Korbes antreibbar sind. Die Rollen können hülsenförmig sein und unmittelbar auf stehenden Rollenachsen gleiten. Für besonderen Leichtlauf können die Rollen auf Wälzlagern gelagert werden. Als Material für die Rollenoberflächen ist jegliches Material denkbar, das ein Anhaften des Folienschlauches sicher vermeidet, beispielsweise Teflon, Nylon, Silikon oder dergleichen, sofern die Rollenoberfläche glatt sein soll, oder Schaumstoff, Filz oder dergleichen, sofern eine strukturierte Rollenoberfläche für günstiger gehalten wird. Hierbei werden entsprechende Hülsen über Grundkörper aus Metall oder Kunststoff gezogen. Alternativ kann eine Beschichtung der Grundkörper vorgenommen werden.

Die Rollen können jeweils paarweise an zueinander höhenversetzten Laschen einer in Draufsicht bügelförmigen Halterung befestigt sein, wobei insbesondere jeweils eine stehende Rollenachse mit der Halterung einendig verschraubt werden kann, auf welcher die Rolle drehbar gelagert ist.

Nach einer ersten günstigen Ausführungsform ist vorgesehen, daß die Rollen jeweils paarweise mit zueinander höhenversetzten sich kreuzenden Achsen an ihren äußeren Enden gehalten sind. Auch hierbei können die Halterungen bügelförmig von auβen jeweils Rollenpaare gemeinsam fixieren, wobei durch die Überkreuzung der inneren Enden die Rollen in Draufsicht vollkommen lückenfrei das Polygon bilden.

Nach einer zweiten Ausführung kann vorgesehen sein, daß die Rollen jeweils paarweise mit zueinander höhenversetzten sich kreuzenden Achsen an ihren inneren Enden gehalten sind. Dies ermöglicht eine kompaktere Bauweise der Halterungen. Die Wirkungsweise ist die gleiche, wie bei der vorhergenannten Ausführung, d.h. im Bereich der Überkreuzung ist das Polygon in Draufsicht lückenfrei geschlossen.

Bevorzugte Ausführungsbeispiele der Erfindung sind in den Figuren dargestellt und werden nachstehend beschrieben.
- Figur 1: zeigt einen erfindungsgemäßen Kalibrierkorb in 3D-Darstellung;
- Figur 2: zeigt
a) die Rollenanordnung eines erfindungsgemäßen Kalibrierkorbes in Draufsicht als Halbdarstellung in einer zweiten Ausführung
b) ein Rollenpaar gemäß Darstellung a) in Draufsicht
c) ein Rollenpaar gemäß Darstellung b) in Innenansicht;
- Figur 3: zeigt
a) die Rollenanordnung eines erfindungsgemäßen Kalibrierkorbes in Draufsicht als Halbdarstellung in einer dritten Ausführung
b) ein Rollenpaar gemäß Darstellung a) in Draufsicht
c) ein Rollenpaar gemäß Darstellung b) in Innenansicht;
- Figur 4: zeigt
a) ein Rollenpaar nach Figur 3 in einem Teilschnitt
b) das Rollenpaar gemäß Darstellung a) in Innenansicht.

Der Kalibrierkorb 11 umfaßt einen Trägerkorb, der aus zwei achteckigen Rahmen 12, 13 und einer Mehrzahl von parallelen Verbindungsstangen 14 besteht, die die beiden Rahmen 12, 13 über dem Umfang verteilt miteinander verbinden. Die senkrechte Mittelachse des Korbs ist im wesentlichen die Mittelachse der zu kalibrierenden Schlauchfolie, die von unten nach oben durch den Kalibrierkorb 11 hindurchgezogen wird. Innerhalb des Korbs liegen acht jeweils den Ecken zugeordnete Rollenträger 15, die mit dem Korb über Scherenhebel 16 radial verstellbar verbunden sind. Jeweils obere Gelenkpunkte der Scherenhebel sind am oberen Rahmenteil 12 bzw. an jedem oberen Ende der Träger 15 gelenkig angeordnet, während untere Enden der ... Scherenhebel höhenverstellbar auf Verstellspindeln 17 bzw. am unteren Ende jedes Trägers 15 geführt sind. Durch Drehantrieb der Spindeln, deren Antriebsmittel inner halb des oberen Rahmens 12 liegen, werden die Spindelmuttern 18 nach oben oder nach unten verschoben und somit die Scherenhebel 16 verstellt. Damit verschieben sich die Träger 15 gleichmäßig radial nach innen öder nach außen. An jedem der Träger ist eine Mehrzahl von sechs Rollenpaaren 21, 22 übereinanderliegend angeordnet, die jeweils an-Rollenhaltern 23 drehbar gelagert sind. Hierdurch sind im weiteren Sinne sechs übereinanderliegende Ebenen von Rollenanordnungen im Kalibrierkorb definiert. Jede der sechzehn Rollen einer Ebene liegt etwa tangential zu einem Kreis, der in die Rahmenachtecke einbeschrieben ist und den gedachten Querschnitt des Folienschlauches darstellen könnte. Hierbei liegen die Rollen jedes einzelnen Paares höhenversetzt zueinander und sind jeweils einseitig fliegend gelagert. In Draufsicht überkreuzen sie sich dabei derart, daß die Rollenlagerungen jeweils an kürzeren Rollenbereichen liegen, die außerhalb eines Kreises durch alle Rollenkreuzungspunkte einer Ebene liegen, während die längeren Bereiche der Rollen innerhalb eines Kreises durch alle Rollenkreuzungspunkte einer Ebene liegen und effektiv der Führung des Folienschlauches dienen. Durch die jeweils kreuzförmige Anordnung der Rollenpaare in Draufsicht werden die der Lagerung dienenden Enden der Rollen von einem Kontakt mit der Schlauchfolie freigehalten.

Zwischen den Rollenpaaren der beiden unteren Ebenen ist an jedem Rollenträger eine breite Absaugdüse 25 angeordnet. Diese Absaugdüsen saugen flüchtige Bestandteile, insbesondere Monomere, aus dem Herstellungsprozeß der Schlauchfolie ab und verhindern somit eine Verschmutzung der höher liegenden Teile des Kalibrierkorbes 11, so daß über längere Zeiten Betriebssicherheit gegeben ist und die Qualität der Schlauchfolie nicht durch Verunreinigungen beeinträchtigt wird. Jede Absaugdüse endet außen in einem Schlauchstutzen 26, der mit einem Absaugschlauch verbunden werden kann.

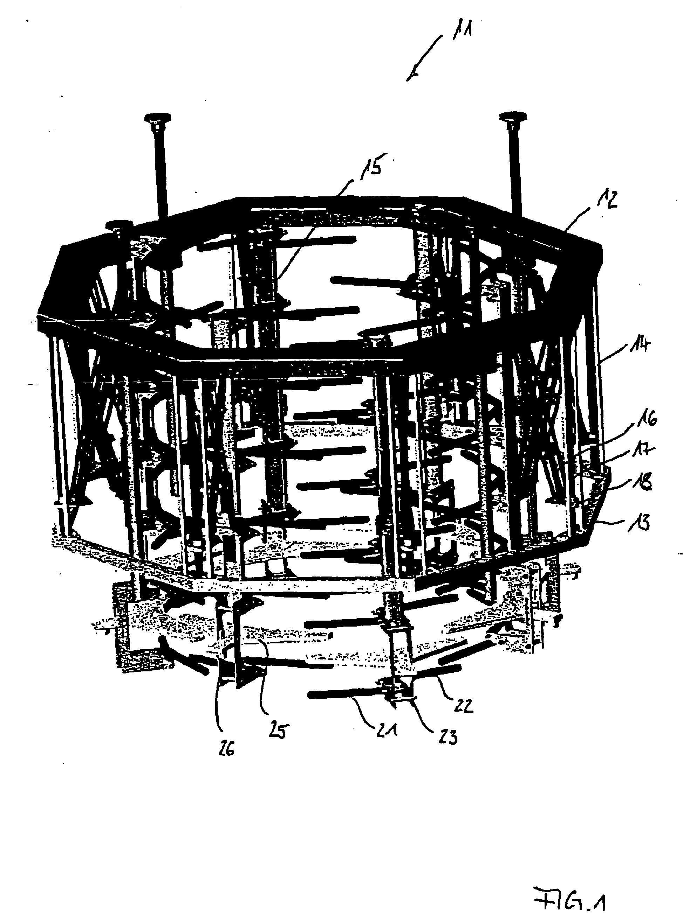

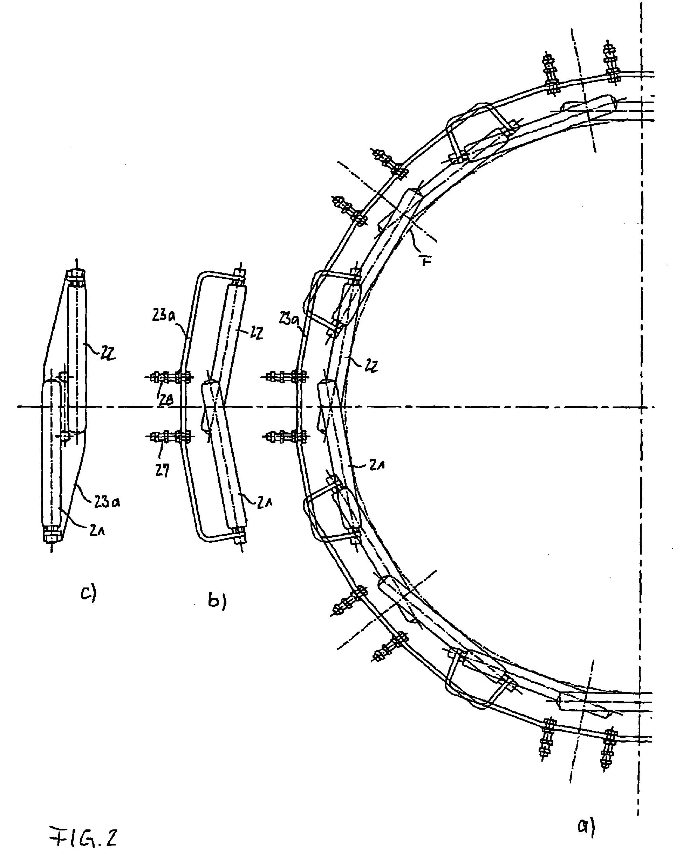

In den Figuren 2 bis 4 sind gleiche Einzelheiten wie in Figur 1 mit gleichen Bezugsziffern belegt. Auf die vorausgehende Beschreibung wird insoweit Bezug genommen.

In Figur 2a sind die Rollenpaare eines Kalibrierkorbes über einen Bereich von 180° in Draufsicht gezeigt. Jeweils zwei Rollen 21, 22, die sich mit ihren Achsen überkreuzen, sind von einer gemeinsamen Halterung 23a aufgenommen, die als im wesentlichen U-förmiger jedoch verschränkter Bügel ausgebildet ist und mittels Verschraubungsmitteln 27, 28 an einem Rollenträger angeschraubt werden kann. Die Rollen sind an ihren äußeren Enden gehalten. Die freien inneren Enden der Rollen eines Rollenpaares überkreuzen sich. Über dem Umfang überdecken sich die einzelnen Halterungen 23a derart, daß sich auch die äußeren Enden der Rollen von benachbarten Rollenpaaren innerhalb einer der Ebenen überkreuzen, d.h. die Halterungen, die benachbart zueinander liegen, überlappen einander. Durch die Überkreuzung im Bereich der äußeren Enden der Rollenpaare ist die Polygonform, die tangential an den strichpunktiert dargestellten Folienschlauch F anliegt, gleichmäßig und weitgehend geschlossen. Bei einer synchronen radialen Verstellung der Halterungen 23a bleiben die Anlageverhältnisse gegenüber einem größeren oder kleineren Kreisquerschnitt weitgehend aufrechterhalten. In den Figuren 2b und 2c ist erkennbar, daß die beiden Rollen 21, 22 eines Rollenpaares höhenversetzt zueinander liegen.

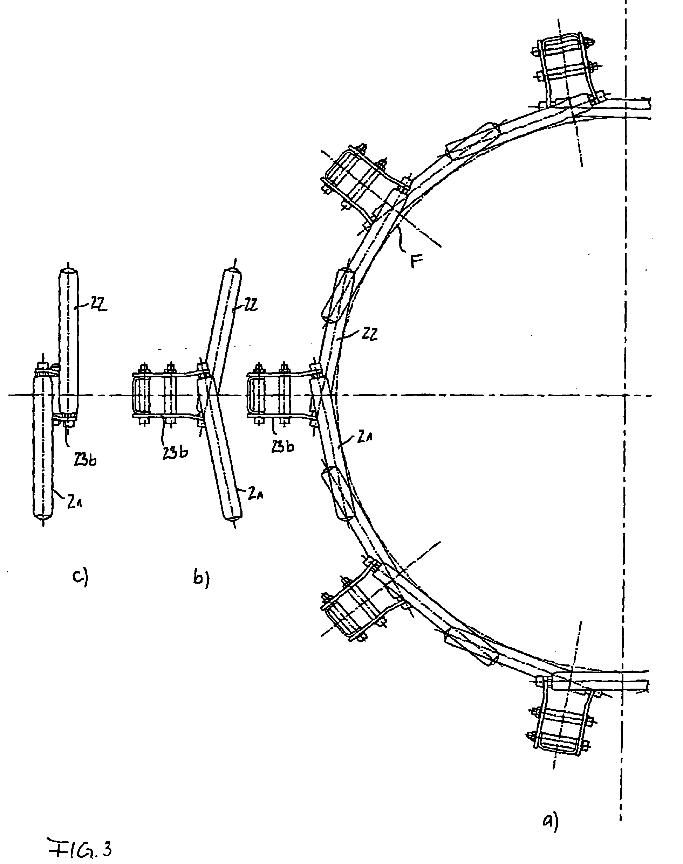

In Figur 3a sind die Rollenpaare eines Kalibrierkorbes über einen Bereich von 180° in Draufsicht gezeigt. Jeweils zwei Rollen 21, 22, die sich mit ihren Achsen überkreuzen, sind von einer gemeinsamen Halterung 23b aufgenommen, die als mehrteilig aufgebauter U-förmiger Bügel ausgebildet ist und an einem Rollenträger angeschraubt werden kann. Die Rollen sind an ihren inneren Enden gehalten. Die gelagerten inneren Enden der Rollen eines Rollenpaares überkreuzen sich. Über dem Umfang haben die einzelnen Halterungen 23b einen solchen Abstand voneinander, daß sich auch die freien äußeren Enden der Rollen benachbarter Rollenpaare innerhalb einer der Ebenen überkreuzen. Durch die Überkreuzung im Bereich der äußeren Enden der Rollenpaare ist die Polygonform, die tangential an den strichpunktiert dargestellten Folienschlauch F anliegt, gleichmäßig und weitgehend geschlossen. Durch eine synchrone radiale Verstellung der Halterungen 23b bleiben die Anlageverhältnisse gegenüber einem größeren oder kleineren Kreisquerschnitt weitgehend aufrechterhalten. In den Figuren 3b und 3c ist erkennbar, daß die beiden Rollen 21, 22 eines Rollenpaares höhenversetzt zueinander liegen.

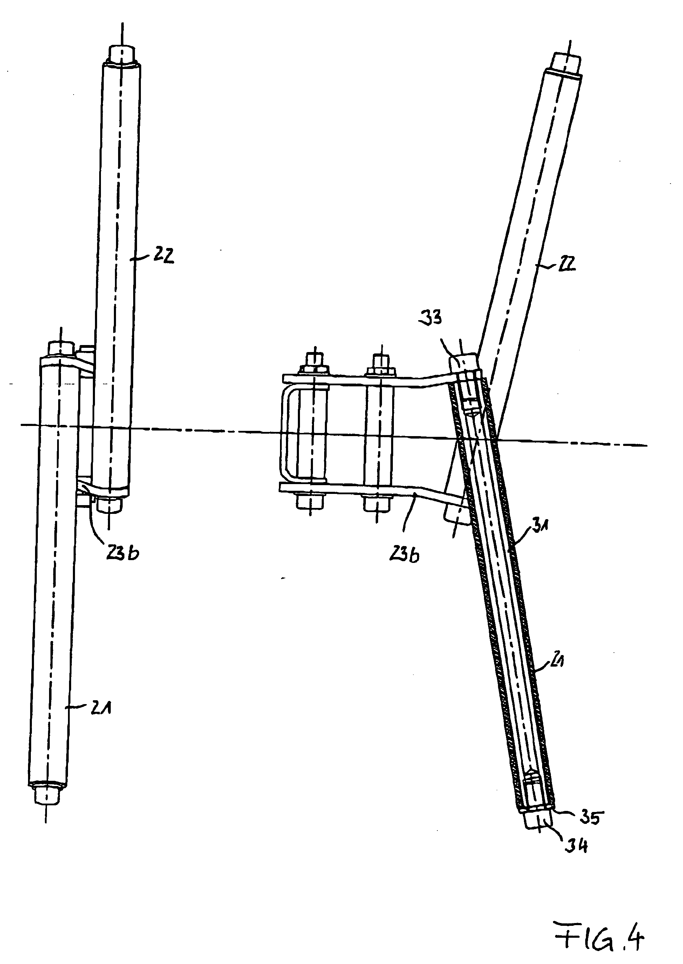

In Figur 4 ist in einem Schnitt dargestellt, daß eine Rolle 29 auf einer stehenden Rollenachse 31, die als Rohr ausgebildet ist, unmittelbar gleitend gelagert ist. Die Rollenachse 31 ist mit einer Schraube 33 an der Halterung 23b befestigt. Mit einer weiteren Schraube 34 und einer Scheibe 35 ist die Rolle 29 auf der Rollenachse 31 gesichert.

### Bezugszeichenliste

- 11: Kalibrierkorb
- 12: oberer Rahmen
- 13: unterer Rahmen
- 14: Abstandsstange
- 15: Rollenträger
- 16: Scherenanordnung
- 17: Spindel
- 18: Spindelmutter
- 19:
- 20:
- 21: Rolle
- 22: Rolle
- 23: Rollenhalterung
- 24:
- 25: Absaugdüse
- 26: Schlauchstutzen
- 27: Befestigungsmittel
- 28: Befestigungsmittel
- 29: Lagermittel
- 30: Lagermittel
- 31: Rollenachse
- 32: Rollenachse
- 33: Schraube
- 34: Schraube
- 35: Scheibe

- F: Folienschlauch

## Patentansprüche

1. Kalibrierkorb (11) zur Durchmesserkalibrierung von aus einem Folienblaskopf austretenden nach oben abgezogenen Folienschläuchen, an dem Rollen (21, 22) mit etwa horizontaler Achse umfangsverteilt in mehreren übereinanderliegenden Ebenen in im wesentlichen tangentialer Anordnung zum runden Schlauchquerschnitt angeordnet sind, wobei die Rollen (21,22) in Aufsicht in Richtung des Folienschlauches jeweils paarweise V-förmig angeordnet und jeweils zumindest paarweise gemeinsam radial zum Folienschlauch verstellbar sind,
**dadurch gekennzeichnet,**
**daß** die in Aufsicht paarweise und von einer gemeinsamen (23, 23a, 23b) Halterung aufgenommenen V-förmig angeordneten Rollen (21,22) jeweils zueinander höhenversetzt sind und sich an ihren inneren Enden überkreuzen, und
**daß** jeweils die äußeren Rollenenden der Rollen von in Draufsicht benachbarten Rollenpaaren (21, 22) sich überkreuzen.

2. Korb nach Anspruch 1,
**dadurch gekennzeichnet,**
**daß** die Rollen (21, 22) jeweils einseitig gehalten sind.

3. Korb nach einem der Ansprüche 1 oder 2,
**dadurch gekennzeichnet,**
**daß** die Rollen (21, 22) jeweils paarweise an zueinander höhenversetzten Laschen einer in Draufsicht im wesentlichen U-förmigen Halterung (23) befestigt sind.

4. Korb nach einem der Ansprüche 1 oder 2,
**dadurch gekennzeichnet,**
**daß** die in Aufsicht paarweise V-förmig angeordneten Rollen (21, 22) jeweils an ihren äußeren Enden gehalten sind.

5. Korb nach einem der Ansprüche 1 oder 2,
**dadurch gekennzeichnet,**
**daß** die in Aufsicht paarweise V-förmig angeordneten Rollen (21, 22) jeweils an ihren inneren Enden gehalten sind.

6. Korb nach einem der Ansprüche 1 bis 5,
**dadurch gekennzeichnet,**
**daß** jeweils eine Mehrzahl von Rollenpaaren (21, 22) übereinanderliegend in gleicher Umfangslage angeordnet sind.

7. Korb nach Anspruch 6,
**dadurch gekennzeichnet,**
**daß** jeweils die Mehrzahl von übereinanderliegenden Rollenpaaren (21, 22) an einem gemeinsamen senkrechten Träger (15) angeordnet und mit diesem gemeinsam radial verstellbar ist.

8. Korb nach einem der Ansprüche 1 bis 7,
**dadurch gekennzeichnet,**
**daß** jeweils unterhalb einer Mehrzahl von übereinanderliegenden Rollenpaaren (21, 22) und/oder jeweils zwischen zumindest zwei in einer Mehrzahl von übereinanderliegenden Rollenpaaren (21, 22) eine Absaugdüse (25) angeordnet ist, die gemeinsam mit den Rollenpaaren radial verstellbar ist.

9. Korb nach einem der Ansprüche 1 bis 8,
**dadurch gekennzeichnet,**
**daß** jeweils mindestens 16 Rollen auf einer Ebene über dem Umfang verteilt angeordnet sind.

10. Korb nach einem der Ansprüche 1 bis 9,
**dadurch gekennzeichnet,**
**daß** die Rollen (21, 22) mittels Wälzlagern auf stehenden Rollenachsen gelagert sind.

11. Korb nach einem der Ansprüche 1 bis 9,
**dadurch gekennzeichnet,**
**daß** die Rollen (21, 22) unmittelbar gleitend auf stehenden Rollenachsen gelagert sind.

## Claims

1. A calibrating cage (11) for calibrating the diameter of blown film which exits from a film blowing head, which is extracted upwardly and at which rollers (21, 22) with an approximately horizontal axis are arranged substantially tangentially relative to a round film cross-section and circumferentially distributed in a plurality of planes positioned one above the other, wherein, in a plan view, in the direction of the blown film, the rollers (21, 22) are arranged in pairs in a V-shaped way and are each adjustable at least jointly in pairs radially relative to the blown film,
**characterised in**
**that** the rollers (21, 22) which, in a plan view, are arranged in pairs and in a V-shaped way and received in a common holding device (23, 23a, 23b) are offset relative to one another in respect of height and intersect one another at their inner ends, and
**that** the outer roller ends of the rollers of adjacent pairs of rollers (21, 22), in a plan view, intersect one another.

2. A cage according to claim 1,
**characterised in**
**that** the rollers (21, 22) are each held on one side.

3. A cage according to any one of claims 1 or 2,
**characterised in**
**that** the rollers (21, 22) are fixed in pairs at brackets which are offset relative to one another in respect of height and which, in a plan view, form part of a substantially U-shaped holding device (23).

4. A cage according to any one of claims 1 or 2,
**characterised in**
**that** the rollers (21, 22) arranged in pairs in a plan view, are each held at their outer ends.

5. A cage according to any one of claims 1 or 2,
**characterised in**
**that** the rollers (21, 22) arranged in pairs in a plan view, are each held at their inner ends.

6. A cage according to any one of claims 1 to 5,
**characterised in**
**that** a plurality of pairs of rollers (21, 22) are arranged one above the other in the same circumferential direction.

7. A cage according to claim 6,
**characterised in**
**that** the plurality of pairs of rollers (21, 22) positioned one above the other are arranged at a common vertical carrier (15) and are jointly radially adjustable together with same.

8. A cage according to any one of claims 1 to 7,
**characterised in**
**that** underneath a plurality of pairs of rollers (21, 22) positioned one above the other and/or between at least two of a plurality of pairs of rollers (21, 22) positioned one above the other, there is arranged a sucking-off nozzle (25) which, together with the pairs of rollers, is radially adjustable.

9. A cage according to any one of claims 1 to 8,
**characterised in**
**that** at least 16 rollers are arranged on one plane so as to be circumferentially distributed.

10. A cage according to any one of claims 1 to 9,
**characterised in**
**that** the rollers (21, 22) are supported by rolling contact bearings on stationary roller axes.

11. A cage according to any one of claims 1 to 9,
**characterised in**
**that** the rollers (21, 22) are directly slidingly supported on stationary roller axes.

## Revendications

1. Cage de calibrage (11) pour le calibrage en diamètre de films tubulaires étirés vers le haut en sortant d'une tête de soufflage de film, sur laquelle sont agencés des rouleaux (21, 22) à axes approximativement horizontaux, répartis sur la périphérie dans plusieurs plans les uns au-dessus des autres et dans un agencement essentiellement tangentiel par rapport à la section ronde du tube, dans laquelle les rouleaux (21, 22) sont agencés respectivement par paires en forme de V en vue de dessus en direction du film tubulaire et sont déplaçables respectivement au moins par paires conjointement radialement par rapport au film tubulaire,
**caractérisée en ce que**
les rouleaux (21, 22) agencés par paires en forme de V en vue de dessus et reçus par une monture commune (23, 23a, 23b) sont décalés en hauteur les uns par rapport aux autres et se croisent à leurs extrémités intérieures, et **en ce que** les extrémités extérieures des rouleaux appartenant à des paires de rouleaux (21, 22) voisines en vue de dessus se croisent.

2. Cage selon la revendication 1,
**caractérisée en ce que** les rouleaux (21, 22) sont tenus respectivement sur un côté.

3. Cage selon l'une des revendications 1 ou 2,
**caractérisée en ce que** les rouleaux (21, 22) sont fixés respectivement par paires sur des pattes décalées en hauteur l'une par rapport à l'autre d'une monture (23) ayant essentiellement une forme en U en vue de dessus.

4. Cage selon l'une des revendications 1 ou 2,
**caractérisée en ce que** les rouleaux (21, 22) agencés par paires en forme de V en vue de dessus sont tenus respectivement à leurs extrémités extérieures.

5. Cage selon l'une des revendications 1 ou 2,
**caractérisée en ce que** les rouleaux (21, 22) agencés par paires en forme de V en vue de dessus sont tenus respectivement à leurs extrémités intérieures.

6. Cage selon l'une des revendications 1 à 5,
**caractérisée en ce qu'**une pluralité de paires de rouleaux (21, 22) sont agencées les unes au-dessus des autres dans la même position périphérique.

7. Cage selon la revendication 6,
**caractérisée en ce que** la pluralité de paires de rouleaux (21, 22) agencées les unes au-dessus des autres sont agencées sur un support vertical commun (15) et déplaçables radialement conjointement avec celui-ci.

8. Cage selon l'une des revendications 1 à 7,
**caractérisée en ce qu'**au-dessous d'une pluralité de paires de rouleaux (21, 22) agencées les unes au-dessus des autres, ou respectivement entre au moins deux paires de rouleaux (21, 22) dans une pluralité de paires de rouleaux agencées les unes au-dessus des autres, est agencée une buse d'aspiration (25) qui est déplaçable radialement conjointement avec les paires de rouleaux.

9. Cage selon l'une des revendications 1 à 8,
**caractérisée en ce qu'**au moins 16 rouleaux sont respectivement agencés sur un plan et répartis sur la périphérie.

10. Cage selon l'une des revendications 1 à 9,
**caractérisée en ce que** les rouleaux (21, 22) sont montés au moyen de paliers à roulements sur des axes de rouleaux verticaux.

11. Cage selon l'une des revendications 1 à 9,
**caractérisée en ce que** les rouleaux (21, 22) sont montés directement en coulissement sur des axes de rouleaux verticaux.
